(19) Europäisches Patentamt
European Patent Office
Office européen des brevets

(11) EP 4 559 726 A2

(12) EUROPEAN PATENT APPLICATION

(43) Date of publication:
28.05.2025 Bulletin 2025/22

(51) International Patent Classification (IPC):
B60L 15/02 (2006.01)  H01M 10/48 (2006.01)

(21) Application number: 24210697.9

(22) Date of filing: 04.11.2024

(52) Cooperative Patent Classification (CPC):
B60L 15/025; H01M 10/48; H01M 10/486

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.11.2023 CN 202311604685

(71) Applicant: Huawei Digital Power Technologies
Co., Ltd.
Shenzhen, Guangdong 518043 (CN)

(72) Inventors:
• LU, Chunhong
Shenzhen, 518043 (CN)
• TANG, Zhengyi
Shenzhen, 518043 (CN)
• BAI, Lifei
Shenzhen, 518043 (CN)

(74) Representative: Gill Jennings & Every LLP
The Broadgate Tower
20 Primrose Street
London EC2A 2ES (GB)

(54) MOTOR CONTROLLER, POWERTRAIN, AND ELECTRIC VEHICLE

(57) This application provides a motor controller, a powertrain, and an electric vehicle. The motor controller is configured to output a drive current or a heating current to an asynchronous motor, and both the drive current and the heating current are three-phase currents. A waveform of each phase current of the drive current is a sine wave, and the drive current is used to control the asynchronous motor to output torque. A waveform of each phase current of the heating current is a square wave or a step wave, and the heating current is used to control the torque output by the asynchronous motor to be zero, and heat a winding of the asynchronous motor. Heat generated by the heating current on the winding of the asynchronous motor heats a power battery via a heat conduction apparatus. The motor controller provided in this application adjusts a waveform of the heating current, to reduce thermal stress on a switch component in the motor controller, to prolong a service life of the switch component. When switch components used by the motor controller have a same heat resistance capability, heating power can be further increased.

FIG. 6

**Description**

**TECHNICAL FIELD**

This application relates to the field of power battery heating, and in particular, to a motor controller, a powertrain, and an electric vehicle.

**BACKGROUND**

In a low-temperature environment, charge and discharge capabilities of a power battery of an electric vehicle decrease sharply. Therefore, the power battery needs to be heated in a low-temperature working condition, to resolve problems such as slow charging and limited drive power of the electric vehicle in the low-temperature working condition. A separate component, namely, a positive temperature coefficient (positive temperature coefficient, PTC) resistor, is usually used in the electric vehicle, and is disposed in a power battery heating loop to heat the power battery.

A stator structure of a motor of the electric vehicle is a winding, and the motor generates heat in a process of generating a driving force. Therefore, a function of the stator structure of the motor is similar to that of the PTC. At present, many electric vehicles heat power batteries via motor windings, to assist PTCs or completely replace PTCs. There are two types of motor heating scenarios: vehicle static heating and vehicle driving heating. The vehicle static heating is a main motor heating scenario.

Two types of motors are mainly included: a synchronous motor and an asynchronous motor. A magnetic field generated by a permanent magnet exists in a rotor of the synchronous motor. Therefore, in a static heating process of the synchronous motor, only a direct current can be used as a stator current. A rotor magnetic field of the asynchronous motor is generated by the rotor through induction. In a static heating process of the asynchronous motor, a direct current or an alternating current can be used as a stator current.

In a process of heating the power battery via the asynchronous motor, if a direct current flows through a stator, currents of three motor windings are unevenly distributed, and it is difficult to accurately monitor a temperature. Although no torque is generated, if an alternating current flows through a stator, noise and vibration problems may occur due to a high frequency of the alternating current, and load of a switch component of an inverter circuit increases due to a low frequency of the alternating current. In this case, heating power needs to be decreased to ensure safety.

**SUMMARY**

This application provides a motor controller, a powertrain, and an electric vehicle. A waveform of a heating current is adjusted, to reduce thermal stress on a switch component in the motor controller, and prolong a service life of the switch component. In addition, when used switch components have a same heat resistance capability, heating power can be further increased.

According to a first aspect, this application provides a motor controller. The motor controller is configured to output a drive current or a heating current to an asynchronous motor. Both the drive current and the heating current are three-phase currents. A waveform of each phase current of the drive current is a sine wave, and the drive current is used to control the asynchronous motor to output torque. A waveform of each phase current of the heating current is a square wave or a step wave, the heating current is used to control the torque output by the asynchronous motor to be zero, and the heating current is used to heat a winding of the asynchronous motor.

In this application, using a heating current of a square wave or a step wave waveform can well prevent a phase current of each phase from staying at a peak. In a case of same heating power, the three-phase current output to the asynchronous motor is changed from a sine wave to a square wave or a step wave, so that the peak of the current can be reduced, and further, a temperature rise amplitude of the switch component can be reduced. In this way, the service life of the switch component is prolonged. When the switch components have the same heat resistance capability, heating power for a power battery can be further improved.

In a possible implementation, each phase current of the heating current periodically changes, and each change periodicity includes a plurality of time periods with different amplitudes and same duration. Each time period of a different amplitude corresponds to a preset angle of a heating current vector. Correspondingly, in a waveform of a square wave or a step wave, a step quantity of the step wave is the same as a quantity of a plurality of preset angles of the heating current vector. If there are N angles of the heating current vector, in a complete periodicity, each phase current is a step wave including N step patterns.

In a possible implementation, each phase current of the heating current periodically changes, each change periodicity includes a plurality of time periods with different amplitudes, and at least one of the plurality of time periods with different amplitudes is greater than another time period. In some scenarios, a phase current of each phase may have a same amplitude. In this case, each phase current of the heating current may include a plurality of time periods with different amplitudes in each change periodicity, and if at least one time period of the plurality of time periods with different amplitudes is greater than another time period, the time period is a sum of time periods corresponding to continuous steps with a same amplitude.

When a heating current vector performs heating current vector angle jump, a current of a stator winding of the asynchronous motor changes abruptly. When the stator winding is energized, a radial flux is generated. If a flux changes abruptly, an induced current is generated on a rotor winding through induction. In this case, a magnetic field generated by the rotor winding interacts with a magnetic field generated by the stator winding. Finally, electromagnetic torque is generated. In a possible implementation, each phase current of the heating current periodically changes, and each change periodicity includes a plurality of time periods in which an amplitude of each phase current of the heating current is zero. The plurality of time periods in which the amplitude is zero include a first time period and a second time period, and the first time period is greater than the second time period.

The first time period is a time period in which the amplitude of the phase current corresponding to the angle of the heating current vector should be zero, and the second time period is a period that is before jump of the angle of the heating current vector is performed and in which an amplitude of the three-phase current is set to zero. Before the angle of the heating current vector jumps, if the amplitude of the three-phase current is set to zero, the stator magnetic field is attenuated to zero. In this case, even if the angle of the heating current vector jumps, because the stator magnetic field has been attenuated to zero, the magnetic field generated by the rotor winding does not interact with the magnetic field generated by the stator winding, so that an electric vehicle avoids an NVH problem. In this way, driving comfort is improved.

In a possible implementation, directions of amplitudes of each phase current of the heating current are opposite at a start moment and an end moment of the first time period, and amplitudes of each phase current of the heating current are the same at a start moment and an end moment of the second time period.

At the start moment and the end moment of the first time period, the angle of the heating current vector changes. Therefore, at the start moment and the end moment of the first time period, the amplitudes of each phase current of the heating current are different, and the directions of the amplitudes are opposite. In a process between the start moment and the end moment of the first time period, because a process between the start moment and the end moment of the second time period corresponds to a process of eliminating the electromagnetic torque, and the angle of the heating current vector is prepared to change but does not actually change, at the start moment and the end moment of the second time period, the amplitudes of each phase current of the heating current are the same.

In a possible implementation, each phase current of the heating current periodically changes, the heating current vector continuously points to each of at least two vector angles in sequence in each change periodicity. The heating current vector is a composite vector of three phase current vectors. When the angle of the heating current vector changes, an amplitude of a two-phase current in the three-phase current changes. In this application, a uniform rotation manner of the heating current vector is adjusted to a manner in which the heating current vector jumps at a specific angle. In this manner, the heating current vector can jump at several specific angles of the heating current vector that are pre-calibrated, to avoid staying at the peak of each phase current.

In a possible implementation, a quadrature axis component of the heating current is zero, an amplitude of a direct axis component of the heating current alternates between a fixed value and zero in sequence, and the fixed value is greater than zero. Because a quadrature axis current is mainly used to adjust torque, to avoid unexpected torque generated by the asynchronous motor, the quadrature axis component of the heating current can be zero. In addition, to avoid generating the electromagnetic torque, the amplitude of the three-phase current of the asynchronous motor is set to zero through sequential alternating of the direct axis component in a process of performing heating current vector angle jump, to avoid generating the unexpected torque.

In a possible implementation, in a process in which the motor controller outputs the heating current, a waveform of the direct axis current component of the heating current periodically changes, and any change periodicity of the direct axis current component includes a third time period and a fourth time period. In the third time period, the amplitude of the direct current component is greater than zero, in the fourth time period, the amplitude of the direct axis current component is equal to zero, and duration of the third time period is greater than duration of the fourth time period. The third time period in this application may correspond to duration of the preset angle of the heating current vector after the angle of the heating current vector jumps, and the fourth time period in this application may correspond to duration of angle jump between two heating current vectors when the angle of the heating current vector jumps.

In a possible implementation, a frequency of each phase current of the drive current is greater than a frequency of each phase current of the heating current.

In a possible implementation, the motor controller includes a control circuit and an inverter circuit. The control circuit is configured to output a control signal to the inverter circuit. The inverter circuit includes three switching transistor bridge arms. A bridge arm midpoint of each switching transistor bridge arm is configured to connect to a phase winding of the motor, and the bridge arm midpoints of the three switching transistor bridge arms of the inverter circuit are configured to output the drive current or the heating current to the winding of the motor.

In a possible implementation, the control circuit includes a direct axis current feedback control circuit and a quadrature axis current feedback control circuit. The direct axis feedback control circuit is configured to: receive a direct axis current feedback signal of the three-phase current, a vector angle sequence signal, and a direct axis current given signal, and output a direct axis current feedback control signal. The vector angle sequence signal indicates a preset vector angle sequence, and the direct axis current given signal indicates the direct axis component of the heating current. The quadrature axis feedback control circuit is configured to: receive a quadrature axis current given signal and a quadrature axis current feedback signal that is of the three-phase current, and output a quadrature axis current feedback control signal. The direct axis current feedback control signal and the quadrature axis current feedback control signal are used to adjust a phase, a frequency, and an amplitude of the three-phase current.

In embodiments of this application, the quadrature axis current given signal may be zero. If a direction angle of the heating current vector needs to be adjusted, the vector angle sequence signal may be adjusted. The motor controller provided in embodiments of this application further implements closed-loop control on the direct axis current and the quadrature axis current of the asynchronous motor by using the direct axis current feedback signal and the quadrature axis current feedback signal.

To avoid generating the electromagnetic torque, when the angle of the heating current vector jumps, the amplitude of the direct axis current component of the heating current may be adjusted to zero, so that the three-phase current is reduced to zero. In a possible implementation, an amplitude of the direct axis current component of the heating current in the third time period is adjusted to a preset value, and an amplitude of the direct axis current component of the heating current in the fourth time period is adjusted to zero. In this way, each time angle jump of the heating current vector is performed, the amplitude of the three-phase current of the asynchronous motor is set to zero, to avoid generating the electromagnetic torque.

In a possible implementation, the control circuit includes a Park inverse transformation circuit. The Park inverse transformation circuit is configured to receive the direct axis current feedback control signal and the quadrature axis current feedback control signal, to control the control circuit to output a frequency and a duty cycle of the control signal to the inverter circuit. The control circuit is configured to output three groups of drive signals, where each group of drive signals is used to control switching frequencies and duty cycles of an upper bridge arm switching transistor and a lower bridge arm switching transistor of one switching transistor bridge arm.

According to a second aspect, this application provides a powertrain, including an asynchronous motor and a motor controller. The motor controller is configured to output a drive current or a heating current to an asynchronous motor. Both the drive current and the heating current are three-phase currents. A waveform of each phase current of the drive current is a sine wave, and the drive current is used to control the asynchronous motor to output torque. A waveform of each phase current of the heating current is a square wave or a step wave, the heating current is used to control the torque output by the asynchronous motor to be zero, and the heating current is used to heat a winding of the asynchronous motor.

In a possible implementation, the powertrain includes a heat conduction apparatus. The heating current is used to heat a winding of the asynchronous motor and a switching transistor bridge arm. The heat conduction apparatus is configured to conduct heat generated by the winding of the asynchronous motor and heat generated by the switching transistor bridge arm to a power battery.

According to a third aspect, this application provides an electric vehicle. The electric vehicle includes a vehicle control unit, a power battery, wheels, and the powertrain according to the second aspect.

The motor controller outputs a drive current in response to a torque signal from the vehicle control unit. The drive current is used to control the asynchronous motor to output torque indicated by the torque signal. The motor controller outputs a heating current in response to a heating signal from the vehicle control unit. A waveform of each phase current of the heating current is a square wave or a step wave, the heating current is used to control the torque output by the asynchronous motor to be zero, and the heating current is used to heat a winding of the asynchronous motor.

The electric vehicle provided in this application includes a battery management system. The battery management system is configured to monitor a temperature of the power battery. When the temperature of the power battery is excessively low, the battery management system sends a heating indication to the vehicle control unit, and the vehicle control unit generates a heating signal based on the heating indication from the battery management system. After receiving the heating signal, the motor controller outputs the heating current to heat the winding of the asynchronous motor, and the heat generated on the winding of the asynchronous motor is conducted to the power battery by using the heat conduction apparatus, to heat the power battery.

**BRIEF DESCRIPTION OF DRAWINGS**

FIG. 1 is a diagram 1 of an electric vehicle according to an embodiment of this application;
FIG. 2 is a diagram of a powertrain according to an embodiment of this application;
FIG. 3 is a schematic of a motor controller according to an embodiment of this application;

FIG. 4 is a waveform time sequence diagram of an existing low-frequency sinusoidal alternating current;
FIG. 5 is a diagram of a heating current vector in an ABC coordinate system;
FIG. 6 is a waveform time sequence diagram 1 of a heating current according to this application;
FIG. 7 is a waveform time sequence diagram 2 of a heating current according to this application;
FIG. 8 is a waveform time sequence diagram 3 of a heating current according to this application;
FIG. 9 is a diagram 1 of controlling of a motor controller according to an embodiment of this application;
FIG. 10 is a diagram 2 of controlling a motor controller according to an embodiment of this application;
FIG. 11 is a flowchart of controlling a motor controller according to this application;
FIG. 12 is a diagram 2 of an electric vehicle according to an embodiment of this application; and
FIG. 13 is a diagram 3 of an electric vehicle according to an embodiment of this application.

## DESCRIPTION OF EMBODIMENTS

Terms used in the following embodiments are merely intended to describe specific embodiments, but are not intended to limit this application. Terms "one", "a", "the foregoing", "the", and "the one" of singular forms used in this specification and the appended claims of this application are also intended to include plural forms like "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements "in an embodiment", "in some embodiments", "in some other embodiments", "in still some other embodiments", and the like in different parts of this specification unnecessarily reference a same embodiment, but mean "one or more embodiments but not all embodiments", unless otherwise specified particularly. Terms "include", "include", "have", and variants thereof all mean "including but not limited to", unless otherwise specified particularly.

The following first describes some terms used in embodiments of this application to help a person skilled in the art have a better understanding.

Currently, a motor of an electric vehicle is usually an alternating current motor, and a power battery is a direct current source. Therefore, a direct current output by the power battery is converted into a three-phase alternating current of the motor through an inverter circuit. Coordinate axes of the three-phase alternating current are separately a U-axis, a V-axis, and a W-axis. Three phases of the alternating current may also be separately referred to as a U phase, a V phase, and a W phase. To simplify analysis of the motor, a stationary three-phase coordinate is usually transformed into a rotating d-q coordinate. Such transformation is Park transformation (park transformation). In a d-q coordinate system, three coordinate axes are separately referred to as a direct axis, a quadrature axis, and a zero axis.

The direct axis (direct axis) is also referred to as a D axis or a d-axis, and is a time-varying direct current coordinate axis obtained from a stationary U/V/W three-phase coordinate axis through Park transformation.

The quadrature axis (quadrature axis) is also referred to as a Q axis or a q-axis, and is a time-varying alternating current coordinate axis obtained from the stationary U/V/W three-phase coordinate axis through park transformation.

The zero axis is also referred to as a 0 axis or a 0-axis, and is a coordinate axis perpendicular to a d-q plane on which the direct axis and the quadrature axis are located.

Specifically, a formula of the Park transformation may be as follows:

$$\begin{bmatrix} I\_d \\ I\_q \\ I\_0 \end{bmatrix} = \frac{2}{3} \begin{bmatrix} \cos(\theta) & \cos(\theta - 2\pi/3) & \cos(\theta + 2\pi/3) \\ -\sin(\theta) & -\sin(\theta - 2\pi/3) & -\sin(\theta + 2\pi/3) \\ 1/2 & 1/2 & 1/2 \end{bmatrix} \begin{bmatrix} I\_u \\ I\_v \\ I\_w \end{bmatrix}$$

Herein, θ is an included angle between the d-axis and the U-axis. I_d is referred to as a direct axis current, and is mainly used to adjust a magnetic field. I_q is referred to as a quadrature axis current, and is mainly used to adjust torque. I_0 is referred to as a zero-sequence current. I_u, I_v, and I_w are respectively currents on the U-axis, the V-axis, and the W-axis, that is, a three-phase current.

The foregoing matrix is an expression for transforming the three-phase current into I_d, I_q, and I_0. An expression for transforming I_d, I_q, and I_0 into the three-phase current may be obtained through inverse matrix transformation. Details are not described herein.

Because the three-phase current is a current corresponding to an actual winding of the motor, when outputting a current to the direct axis of the motor, a motor controller needs to transform I_d into a three-phase current I_u, I_v, and I_w through inverse transformation of Park transformation, and input I_u, I_v, and I_w into the winding of the motor; or when outputting a current to the zero axis of the motor, a motor controller needs to transform I_0 into a three-phase current I_u, I_v, and I_w through inverse transformation of Park transformation, and input I_u, I_v, and I_w into the winding of the motor.

A quadrature axis voltage/current is used to control torque output by a drive motor, and a direct axis voltage/-current is used to control a direction and a magnitude of a magnetic field generated by the drive motor. The electric vehicle includes the drive motor, the motor controller, and the power battery. The motor controller receives electric energy of the power battery and supplies power to the drive motor. The drive motor is configured to drive a wheel of the electric vehicle to rotate, so that the electric vehicle travels.

A temperature has a great impact on the power battery. A lithium plating phenomenon may occur when the power battery is charged and discharged at a low temperature. This may cause a power battery capacity to decrease and even cause a power battery safety risk. Therefore, the electric vehicle is allowed to travel only after the power battery is first heated to be at a specific temperature. The motor generates heat in a driving process. Therefore, currently, many electric vehicles heat power batteries through motor windings.

A stator of the motor is a stationary part in the motor, and mainly includes an iron core and a stator winding. A rotor of the motor is a rotating part in the motor, and is configured to convert electric energy into mechanical energy.

Two types of motors are mainly included: a synchronous motor and an asynchronous motor. A magnetic field generated by a permanent magnet exists in a rotor of the synchronous motor. Therefore, in a static heating process of the synchronous motor, only a direct current can be used as a stator current. A rotor magnetic field of the asynchronous motor is generated by rotor induction. In a static heating process of the asynchronous motor, a direct current or an alternating current can be used as a stator current.

Static heating of the asynchronous motor includes the following solutions:

1. When a rotor is static, the direct current is used as the stator current for heating.
2. When a rotor is static, a high-frequency (approximately 1 kHz) sinusoidal alternating current is used as the stator current for heating.
3. When a rotor is static, a low-frequency (<0.1 Hz) sinusoidal alternating current is used as the stator current for heating.

When the direct current is used on the stator for heating, although no torque is generated on the asynchronous motor, heating of the motor winding is concentrated on one winding because a three-phase current of the stator is unbalanced in magnitude.

When the alternating current is used on the stator for heating, although three phase currents flowing through three motor windings are balanced in magnitude, if a frequency of the alternating current is high, a noise, vibration, and harshness (noise, vibration, and harshness, NVH) problem is caused in a heating process, resulting in poor driving experience of a user.

Although there is no NVH problem when an alternating current with a low frequency is used, because the frequency of the alternating current is low, the alternating current maintains at a peak current for excessively long time, and a switch component of the inverter circuit of the drive motor is subject to large thermal stress. Therefore, heating power derating is easily caused.

The foregoing several solutions all have disadvantages. In view of this, a motor controller needs to be designed to control heating of the asynchronous motor, to maximize a heating capability of the asynchronous motor, to overcome the disadvantages in the conventional technology.

This application provides a motor controller to control heating of the asynchronous motor, and input a low-frequency alternating current whose waveform is a square wave or a step wave to the asynchronous motor for heating, to reduce thermal stress on the switch component of the inverter circuit and improve heating efficiency of the power battery without causing an NVH problem.

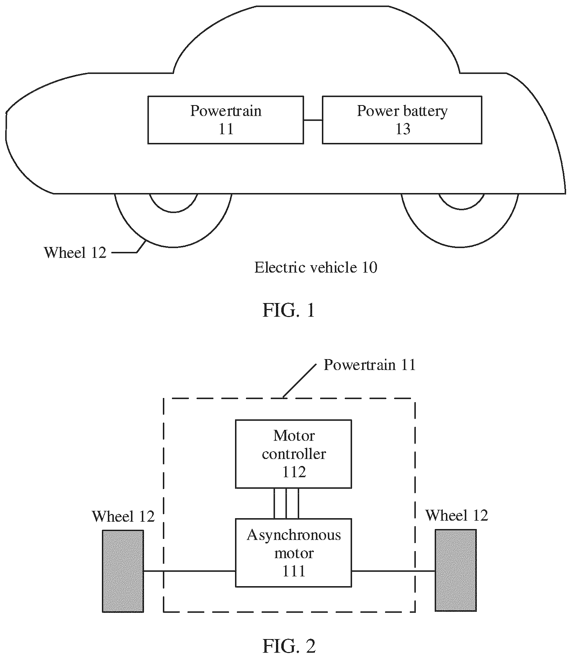

FIG. 1 is a diagram of an electric vehicle according to an embodiment of this application. Refer to FIG. 1. An electric vehicle 10 includes a powertrain 11, wheels 12, and a power battery 13. The powertrain 11 is configured to receive power supplied by the power battery 13, to drive the wheel 12, or is configured to heat the power battery 13.

FIG. 2 is a diagram of the powertrain according to an embodiment of this application. The powertrain 11 includes an asynchronous motor 111 and a motor controller 112. The motor controller 112 receives a direct current of the power battery 13, converts the direct current into a three-phase alternating current, and then supplies power to the asynchronous motor 111. The asynchronous motor 111 is connected to the wheel 12 by using a reducer or a speed converter through transmission. In a traveling process of the electric vehicle 10, torque of the asynchronous motor 111 is transmitted to the wheel 12 to provide power for the electric vehicle 10.

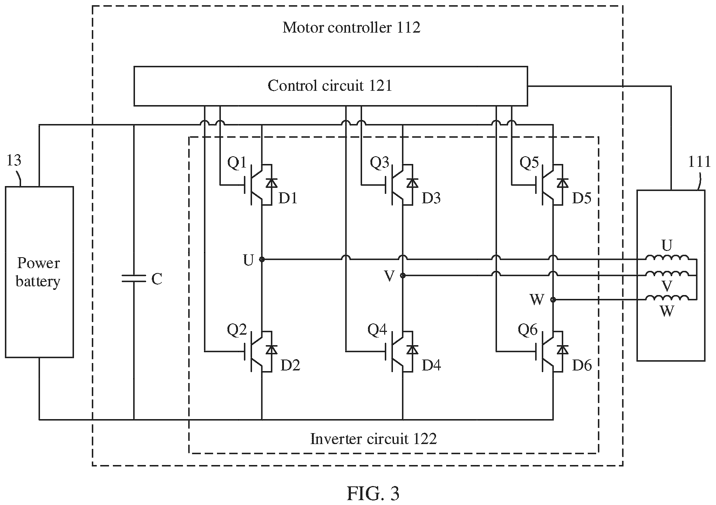

FIG. 3 is a schematic of the motor controller according to an embodiment of this application. As shown in FIG. 3, the motor controller 112 may include a control circuit 121, an inverter circuit 122, and a bus capacitor C. One end of the bus capacitor C is configured to connect to a positive electrode of the power battery 13, and the other end of the bus capacitor C is configured to connect to a negative electrode of the power battery 13. The inverter circuit 122 includes three switching transistor bridge arms, two ends of each switching transistor bridge arm are respectively connected to two ends of the bus capacitor C, and a bridge arm midpoint of each switching transistor bridge arm is configured to connect to a phase winding of the asynchronous motor 111. A rotor position signal output end of the asynchronous motor 111 is connected to a signal collection end of the control circuit 121, and two ends of the switching transistor bridge arm are respectively connected to the positive electrode and the negative electrode of the power battery 13. The control circuit 121 controls, by using a PWM control signal, the inverter circuit 122 to output a three-phase current.

The power battery 13 provided in this application may be a lithium-ion battery, a lead-acid battery, a solar battery, or the like. A type of the power battery is not limited in this application.

The control circuit 121 may include but is not limited to a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The control circuit 121 may output control signals to bridge arms of the inverter circuit 122, to control switches in bridge arms to be turned on or turned off. The control signal may be a pulse width modulation (pulse width modulation, PWM) signal.

When the motor controller 112 runs in an inverter mode, the power battery 13 may provide a direct current for the inverter circuit 122. The inverter circuit 122 may convert the direct current output by the power battery 13 into an alternating current, and output the alternating current to the asynchronous motor 111. The inverter circuit 122 separately transmits an output three-phase alternating current to a three-phase stator winding. The three-phase stator winding may drive the wheel 12 to rotate under an action of the three-phase alternating current.

When the motor controller 112 outputs a heating current to the asynchronous motor 111, a waveform of each phase current of the heating current is a square wave or a step wave. Heating power for the power battery 13 is mainly limited by a temperature of the asynchronous motor 111 and a temperature of a switch component of the inverter circuit 122. If the power battery 13 needs to obtain high heating power, temperatures of the asynchronous motor 111 and the switch component of the inverter circuit 122 may be excessively high. In this case, the heating power may be derated. Therefore, heating may be performed by outputting a low-frequency sinusoidal alternating current to the asynchronous motor 111, so that three-phase heat balance of the asynchronous motor 111 can be implemented.

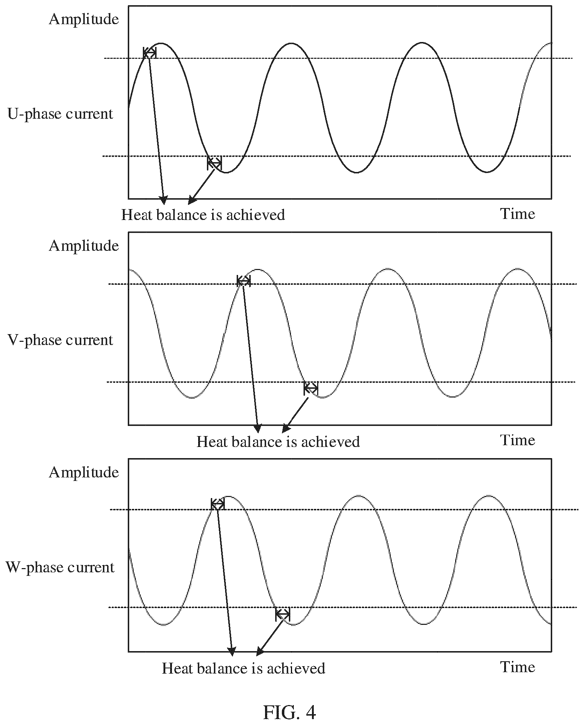

FIG. 4 is a waveform time sequence diagram of an existing low-frequency sinusoidal alternating current. It can be seen from FIG. 4 that, because a frequency of each phase current is excessively low, when each bridge arm in the inverter circuit 122 outputs a phase current, a phase current that actually flows through a switch component of each bridge arm can already enable the switch component to achieve heat balance. However, when the low-frequency sinusoidal alternating current is currently used, time during which the phase current flowing through the switch component of each bridge arm stays at a peak far exceeds time during which the switch component achieves heat balance. In addition, because each phase current is a sine wave, in some scenarios, the switch component may have been in a heat balance state, but the phase current still needs to rise to a higher peak. In this case, the switch component is more likely to have an overtemperature problem, which further causes a failure of the switch component. Because a thermal response time (thermal response time) constant of the switch component is small, the switch component of each bridge arm of the inverter circuit 122 is subject to larger thermal stress.

The heat balance of the switch component means that temperatures of parts inside the component are balanced, and there is no temperature gradient. In an actual semiconductor device, heat is generated inside the device due to factors such as current flow and collision heat dissipation of electrons. If the heat cannot be effectively dissipated, a temperature of the device increases. As a result, heating power decreases, and performance and a service life of the device are affected.

To resolve the foregoing problem, in this application, a heating current vector is adjusted, so that a waveform of a heating current is adjusted from a sine wave to a square wave or a stepped wave. This prevents the switch component of each bridge arm of the inverter circuit 122 from being subject to larger thermal stress. In this way, the service life of the switch component is prolonged. The heating current vector is a vector synthesized by vectors corresponding to three phase currents. If an angle of the heating current vector changes, it indicates that an amplitude of each phase current in the three-phase current also change.

In addition, when heating power is the same, because a peak of a square wave or a step wave is lower than a peak of a sine wave, heating power for the power battery 13 can be further improved when heat resistance capabilities are the same.

The three-phase stator winding of the asynchronous motor 111 in embodiments of this application specifically includes a U-phase stator winding, a V-phase stator winding, and a W-phase stator winding. The three three-phase stator windings are wound in iron core grooves with a spacing of 120° in space. After the stator windings are energized, a radial flux is generated. For any stator winding, a direction of the generated flux is always in a direction of an iron core of the winding. Therefore, in a spatial dimension, an included angle between a direction in which a center of a rotor points to the U-phase stator winding and a direction in which the center of the rotor points to the V-phase stator winding is 120°. An included angle between the direction in which the center of the rotor points to the V-phase stator winding and a direction in which the center of the rotor points to the W-phase stator winding is 120°. An included angle between the direction in which the center of the rotor points to the U-phase stator winding and the direction in which the center of the rotor points to the W-phase stator winding is 120°. When each phase alternating current flows through the corresponding stator winding, electrons inside the stator winding move back and forth under an action of an alternating electric field. This process causes vibration of molecules and atoms inside the stator winding, resulting in friction. As a result, energy is converted into heat energy, and the stator winding heats up due to generation of the heat energy.

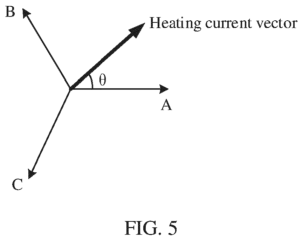

Refer to FIG. 5. The three-phase stator winding is rotated clockwise by 90 degrees, and a coordinate system is drawn in a direction of a stator iron core, to obtain an ABC coordinate system. Alternating currents with a phase difference of 120 degrees are respectively on the three stator windings, a flux generated by each phase current in the direction of the iron core is proportional to the applied current. In the ABC coordinate system, a waveform and a magnitude of each phase current can be adjusted by adjusting a direction angle of the heating current vector.

For ease of representation, for example, a reference direction involved in FIG. 5 and the following embodiments may be a direction in which the heating current vector points to a phase-A axis in the coordinate system ABC. In other words, a moment at which the phase-A axis is at a positive peak may be defined as 0° of the heating current vector.

It should be noted that a projection generated by the heating current vector in a direction of the phase-A axis is a waveform of a U-phase current, a projection generated by the heating current vector in a direction of a phase - B axis is a waveform of a V-phase current, and a projection generated by the heating current vector in a direction of a phase-C axis is a waveform of a W phase current.

That is, the direction angle of the heating current vector is adjusted, to adjust the waveform and the magnitude of each phase current, to output the low-frequency alternating current whose waveform is a square wave or a step wave to the asynchronous motor 111 for heating.

It may be understood that, if the current whose waveform is a sine wave is to be output to the asynchronous motor 111 for heating, the heating current vector is controlled to rotate counterclockwise at a uniform speed in the ABC coordinate system. In a process in which the heating current vector rotates counterclockwise at the uniform speed, the waveform of each phase current is a sine wave. As described in the foregoing embodiment, due to the sine waveform, it is inevitable that each phase current flowing through each bridge arm stays at (near) a current peak for a period of time. During this period of time, the switch component has been in a heat balance state, after the heat balance is achieved, the switch component of the bridge arm is subject to large thermal stress. Therefore, the service life of the switch component is also shortened.

In view of this, a motor controller provided in this application adjusts a waveform of the output heating current from a sine wave to a square wave or a step wave. This can prevent the switch component of each bridge arm of the inverter circuit 122 from being subject to larger thermal stress. In this way, the service life of the switch component is prolonged. In addition, when heat resistance capabilities of used switch components are the same, heating power can be further increased.

Still refer to FIG. 5. Because the heating current vector changes in the space dimension in a uniform rotation manner, it is inevitable that each phase current stays at (near) the current peak for a period of time. Therefore, in this application, the uniform rotation manner of the heating current vector is adjusted to a manner in which the heating current vector jumps at a specific angle. In this manner, the heating current vector can jump at several specific angles of the heating current vector that are pre-calibrated. In this adjustment manner, the waveform of each phase current is adjusted to a square wave or a step wave. In this way, a problem that after the switch component is in the heat balance state, the phase current continues to rise to a higher peak, causing overtemperature of the switch component and further causing a failure of the switch component can be avoided.

The U phase current is used as an example. A moment at which the phase-A axis is at the positive peak is defined as 0 degrees of the heating current vector, and the projection generated by the heating current vector in the direction of the phase-A axis is the waveform of the U phase current. Therefore, to avoid staying at or near a peak of the U-phase current for excessively long time, a plurality of angles at which the heating current vector stays may be preset in this application, so that the heating current vector jumps at the plurality of preset angles at a non-uniform speed. After the heating current vector jumps at each angle, the heating current may be continuously output to the asynchronous motor at the angle. In this way, heating of the stator winding may be implemented, and the phase current flowing through each bridge arm is not at a phase current peak.

Selection of the angle at which the heating current vector stays may comply with the following standards.

Because each phase current has a positive current peak and a negative current peak in a control period, for the asynchronous motor 111 including the three-phase winding, if an angle that is of the heating current vector (or a close angle) and that corresponds to the positive/negative current peak of each phase current can be dodged when a plurality of angles of a current vector are set, the switch component of each bridge arm of the inverter circuit 122 can be prevented from being subject to larger thermal stress. In this way, the service life of the switch component is prolonged. In addition, the heating power can be increased when the heat resistance capabilities are the same.

If the heating current vector jumps at the plurality of preset angles of the heating current vector, when the motor controller 112 finally outputs the heating current to the asynchronous motor 111, the waveform of each phase current of the heating current changes from a sine wave to a square wave or a step wave. In addition, after the heating current vector completes one heating current vector angle jump, the heating current vector may be further controlled to stay at the angle for preset duration, so that on a premise of completing heating, thermal stress on the switch component of each bridge arm of the inverter circuit 122 is reduced, time for each phase current to stay at the peak is shortened.

In a possible implementation, the plurality of preset angles of the heating current vector may be in the following vector angle sequence: {30°, 90°, 150°, 210°, 270°, 330°}. When the heating current vector performs heating current vector angle jump, the heating current vector may sequentially jump based on an angle provided in the foregoing angle sequence, and after each jump, the heating current vector is controlled to stay at the angle for the preset duration.

Each phase current corresponds to a positive current peak and a negative current peak. Therefore, if the direction in which the heating current vector points to the phase-A axis in the ABC coordinate system is defined as a vector angle 0° of the heating current vector, a vector angle corresponding to the U-phase current at the positive current peak is 0°, a vector angle corresponding to the U-phase current at the negative current peak is 180°, a vector angle corresponding to the V-phase current at the positive current peak is 120°, a vector angle corresponding to the V phase current at the negative current peak is 300°, a vector angle corresponding to the W phase current at the positive current peak is 240°, and a vector angle corresponding to the W phase current at the negative current peak is 60°.

Therefore, the vector angle sequence provided in the foregoing embodiment can well dodge the vector angle corresponding to the positive/negative peak current of the U/V/W phase, so that thermal stress on the switch component of each bridge arm of the inverter circuit 122 is reduced.

It should be noted that the plurality of preset angles of the heating current vector provided in this application are not limited to the vector angle sequence provided in the foregoing embodiment, and a quantity of angles of the heating current vector is not limited to the angle sequence provided in the foregoing embodiment either. It should be understood that, when the plurality of angles of the heating current vector are set, as long as the angle that is of the heating current vector (or the close angle) and that corresponds to the positive/negative current peak of each phase current is dodged, the switch component of each bridge arm of the inverter circuit 122 may be prevented from being subject to larger thermal stress. In this way, the service life of the switch component is prolonged.

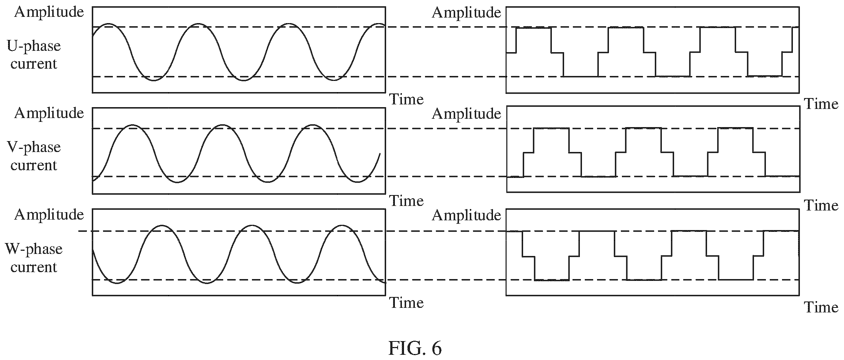

FIG. 6 is a waveform time sequence diagram of the heating current according to this application. It can be seen from FIG. 6 that, using a heating current of a square wave or a step wave waveform can well prevent a phase current of each phase from staying at a peak. In a case of same heating power, the three-phase current output to the asynchronous motor 111 is changed from a sine wave to a square wave or a step wave, so that the peak of the current can be reduced, and further, a temperature rise amplitude of the switch component can be reduced. In this way, the service life of the switch component is prolonged.

In a possible implementation, each phase current of the heating current periodically changes, and each change periodicity includes a plurality of time periods with different amplitudes and same duration. Each time period of a different amplitude corresponds to a preset angle of the heating current vector. Correspondingly in a waveform of a square wave or a step wave, a step quantity of the step wave is the same as a quantity of the plurality of preset angles of the heating current vector. That is, if there are N angles of the heating current vector, in a complete periodicity, each phase current is a step wave including N step patterns.

In some scenarios, projection sizes of two different angles of the heating current vector on a phase axis (a phase A/B/C) are the same. In this case, because the projection sizes are the same, the phase current of each phase may have a same amplitude. That is, if stay time of the heating current vector at the plurality of preset angles of the heating current vector is the same, there may be continuous steps with a same amplitude in each phase current of the heating current. In this case, each phase current input to the asynchronous motor 111 may include a plurality of time periods with different amplitudes in each change periodicity, and if at least one time period of the plurality of time periods with different amplitudes is greater than another time period, the time period is a sum of time periods corresponding to the continuous steps with the same amplitude.

When the heating current vector performs heating current vector angle jump, a current of the stator winding of the asynchronous motor 111 changes abruptly. When the stator winding is energized, a radial flux is generated. If a flux changes abruptly, an induced current is generated on the rotor winding through induction. In this case, a magnetic field generated by the rotor winding interacts with a magnetic field generated by the stator winding. Finally, electromagnetic torque is generated. The electromagnetic torque is a torque ripple generated due to interaction between a stator current and a rotor magnetic field. If the electromagnetic torque is generated, the electric vehicle 10 may shake.

Therefore, in this application, a waveform of a square wave or a step wave current is further modified. Because each time period with a different amplitude corresponds to a preset angle of the heating current vector, in the waveform corresponding to the step wave, a quantity of steps of the square wave or the step wave is the same as the quantity of the plurality of preset angles of the heating current vector, and each step in the step wave corresponds to one angle of the heating current vector. In this application, before the angle of the heating current vector jumps, the amplitude of each phase current can be reduced. This reduces the magnetic field generated by the stator winding. Because the magnetic field generated by the stator winding is reduced, the final electromagnetic torque is also significantly reduced.

Further, before the angle of the heating current vector jumps, if the amplitude of each phase current can be set to zero, the stator magnetic field is attenuated to zero. In this case, even if the angle of the heating current vector jumps, because the stator magnetic field has been attenuated to zero, the magnetic field generated by the rotor winding does not interact with the magnetic field generated by the stator winding, so that the electric vehicle 10 avoids an NVH problem. In this way, driving comfort is improved.

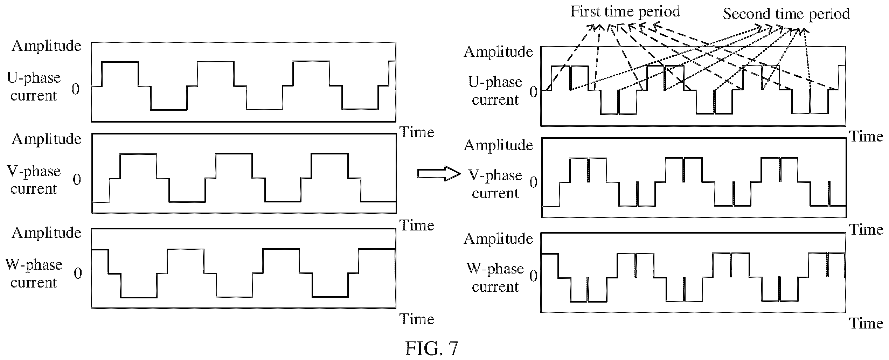

FIG. 7 is time sequence diagram that is of the three-phase current and that corresponds to a control manner for avoiding generating the electromagnetic torque. In the waveform of the heating current, it may be reflected that each phase current of the heating current periodically changes, each change periodicity includes a plurality of time periods in which the amplitude of each phase current of the heating current is zero, the plurality of time periods in which the amplitude is zero include a first time period and a second time period, and the first time period is greater than the second time period.

In the plurality of time periods in which the amplitude is zero, the first time period is a time period in which the amplitude of the phase current corresponding to the angle of the heating current vector should be zero, and the second time period is a period that is before jump of the angle of the heating current vector is performed and in which the amplitude of each phase current is set to zero. For example, if duration of a complete periodicity is 21s, duration of the first time period is 3.5s, and duration of the second time period may be hundreds of milliseconds.

The three-phase current of the asynchronous motor 111 is obtained by combining a given amplitude of the direct axis current and an angle of the heating current vector. The angle of the heating current vector may be preset. The given amplitude of the current is related to the heating power of the asynchronous motor 111. A larger given amplitude of the direct axis current indicates higher heating power.

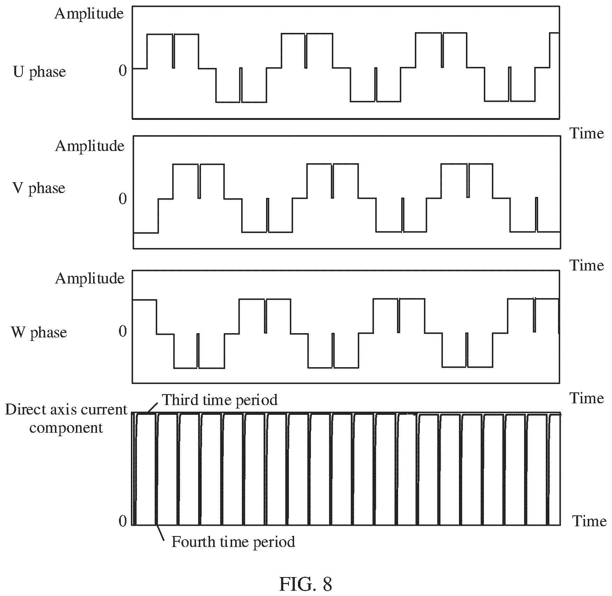

In a possible implementation, a quadrature axis component of the heating current is zero, an amplitude of a direct axis component of the heating current alternates between a fixed value and zero in sequence, and the fixed value is greater than zero. Because a quadrature axis current is mainly used to adjust torque, to prevent the asynchronous motor 111 from generating unexpected torque, the quadrature axis current of the heating current may be set to 0. Each alternation of the direct axis component of the heating current corresponds to each jump of the angle of the heating current vector. In addition, when the heating current vector performs angle jump of the heating current vector, to avoid generating electromagnetic torque, the amplitude of the three-phase current of the asynchronous motor 111 needs to be set to zero each time the heating current vector performs angle jump of the heating current vector. In this case, the stator magnetic field is also attenuated to zero. Even if the angle of the heating current vector jumps, because the stator magnetic field has been attenuated to zero, the magnetic field generated by the rotor winding does not interact with the magnetic field generated by the stator winding. To set the amplitude of the three-phase current of the asynchronous motor 111 to zero, the direct axis current component of the heating current may be adjusted to zero. Refer to FIG. 8. In a possible implementation, in a process in which the motor controller 112 outputs the heating current, a waveform of the direct axis current component of the heating current periodically changes, and a change periodicity of the direct axis current component includes a third time period and a fourth time period. In the third time period, the direct current component is a given value, in the fourth time period, the amplitude of the direct axis current component is equal to zero, and duration of the third time period is greater than duration of the fourth time period. The third time period may correspond to duration of the preset angle of the heating current vector after the angle of the heating current vector jumps, and the fourth time period may correspond to duration of angle jump between two heating current vectors when the angle of the heating current vector jumps.

In embodiments of this application, the control circuit 121 configured to control the asynchronous motor 111 may include a direct axis current feedback control circuit and a quadrature axis current feedback control circuit.

The direct axis feedback control circuit is configured to: receive a direct axis current feedback signal of the three-phase current, a vector angle sequence signal, and a direct axis current given signal, and output a direct axis current feedback control signal. The vector angle sequence signal indicates a preset vector angle sequence, and the direct axis current given signal indicates the direct axis component of the heating current.

The quadrature axis feedback control circuit is configured to: receive a quadrature axis current given signal and a quadrature axis current feedback signal that is of the three-phase current, and output a quadrature axis current feedback control signal. The quadrature axis current given signal indicates the quadrature axis component of the heating current. The direct axis current feedback control signal and the quadrature axis current feedback control signal are used to adjust a phase, a frequency, and an amplitude of the three-phase current. In embodiments of this application, the quadrature axis current given signal may be zero. If the direction angle of the heating current vector needs to be adjusted, an angle indicated by the vector angle sequence signal may be adjusted. The motor controller 112 provided in embodiments of this application implements closed-loop control on the direct axis current and the quadrature axis current of the asynchronous motor 111 by using the direct axis current feedback signal and the quadrature axis current feedback signal.

To avoid generating the electromagnetic torque, when the angle of the heating current vector jumps, the amplitude of the direct axis current component of the heating current may be adjusted to zero, so that the three-phase current is reduced to zero. An amplitude of the direct axis current component of the heating current in the third time period is adjusted to a preset value, and an amplitude of the direct axis current component of the heating current in the fourth time period is adjusted to zero. In this way, each time angle jump of the heating current vector is performed, the amplitude of the three-phase current of the asynchronous motor 111 is set to zero, to avoid generating the electromagnetic torque.

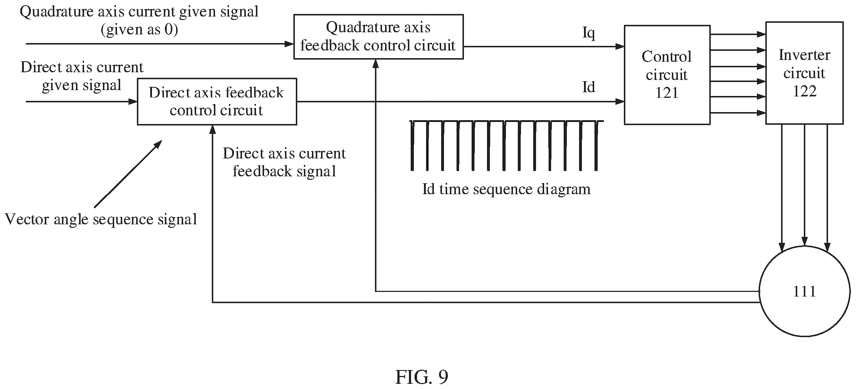

As shown in FIG. 9, the control circuit 121 of the motor controller 112 includes the quadrature axis current feedback control circuit and the direct axis current feedback control circuit. The quadrature axis current feedback control circuit is configured to perform closed-loop control on the quadrature axis current of the asynchronous motor 111, and the direct axis current feedback control circuit is configured to perform closed-loop control on the direct axis current of the asynchronous motor 111.

The quadrature axis current feedback control circuit generates a quadrature axis current Iq based on the quadrature axis current indicated by the quadrature axis current given signal. At the same time, the quadrature axis current feedback control circuit adjusts a magnitude of the quadrature axis current given signal based on the quadrature axis current of the drive motor indicated by the quadrature axis current feedback signal that is collected from the asynchronous motor 111, to implement closed-loop control of the quadrature axis current. In embodiments of this application, the quadrature axis current given signal is 0.

Similarly, the direct axis current feedback control circuit generates a direct axis current Id based on the direct axis current indicated by the direct axis current given signal and the vector angle sequence signal. At the same time, the direct axis current feedback control circuit adjusts a magnitude of the direct axis current given signal based on the direct axis current of the drive motor indicated by the direct axis current feedback signal that is collected from the asynchronous motor 111, to implement closed-loop control of the direct axis current.

The quadrature axis current is used as an example. Herein, iq is a quadrature axis current value indicated by the quadrature axis current given signal, and iq' is the quadrature axis current of the drive motor indicated by the quadrature axis current feedback signal. The control circuit 121 obtains a difference between iq and iq' through comparison. The PI regulator in the quadrature axis current feedback control circuit outputs an adjustment value based on the difference between iq and iq', to adjust, in time, the quadrature axis current given signal sent to the control circuit. The control circuit outputs a PWM control signal based on an adjusted quadrature axis current reference signal, to control the inverter circuit 122 to output the three-phase current.

The direct axis current feedback control circuit is configured to determine the direct axis current given signal and the quadrature axis current given signal based on a target vector angle in the vector angle sequence signal. The direct axis feedback control circuit is configured to: receive the direct axis current given signal, the direct axis current feedback signal of the three-phase current, and the target vector angle, and output the direct axis current feedback control signal. The quadrature axis feedback control circuit is configured to: receive the quadrature axis current given signal and the quadrature axis current feedback signal that is of the three-phase current, and output the quadrature axis current feedback control signal. The direct axis current feedback control signal and the quadrature axis current feedback control signal are used to continuously adjust the phase, the frequency, and the amplitude of the three-phase current, so that the heating current vector is kept at the target vector angle for first specified duration (the same as duration of the third time period).

After the first specified duration, the direct axis current Id is adjusted to zero for second set duration (the same as duration of the fourth time period). The direct axis current feedback control circuit is configured to determine the direct axis current given signal and the quadrature axis current given signal based on a next target vector angle, to set the amplitude of the three-phase current of the asynchronous motor 111 to zero when performing angle jump of the heating current vector, to avoid generating the electromagnetic torque. The foregoing steps are continuously performed to complete heating of the power battery.

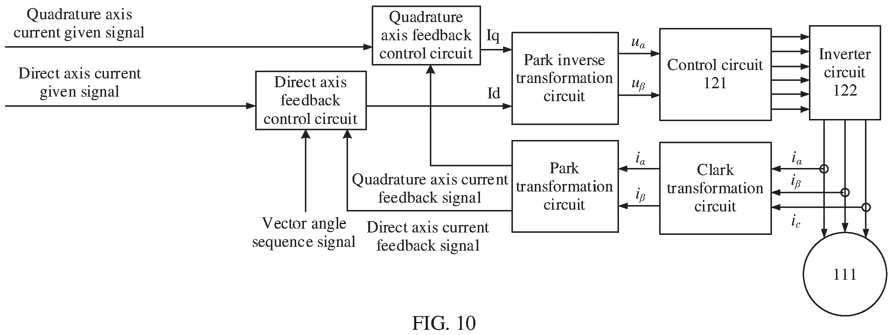

Refer to FIG. 10. In embodiments of this application, the control circuit 121 further includes a Park transformation (Park transformation) circuit and a Clark transformation (Clark transmission) circuit. The Park transformation circuit in this application is configured to convert two components in an $\alpha\beta$ coordinate system into parameters in an orthogonal rotating coordinate system (dq coordinate system). A Park inverse transformation circuit in this application is configured to convert parameters in the orthogonal rotating coordinate system (dq coordinate system) into two components in the $\alpha\beta$ coordinate system. The Clark transformation circuit in this application is configured to convert a time domain component of the three-phase current (abc coordinate system) into two components in an orthogonal static coordinate system ($\alpha\beta$). Specifically, the Park transformation circuit provided in embodiments of this application is configured to: receive the direct axis current feedback control signal and the quadrature axis current feedback control signal, and perform Park inverse transformation on the direct axis current feedback control signal and the quadrature axis current feedback control signal to obtain voltage signals U$\alpha$ and U$\beta$ in the $\alpha\beta$ coordinate system. After U$\alpha$ and U$\beta$ are sent to the control circuit, the control circuit generates the PWM control signal based on the signals U$\alpha$ and U$\beta$. The PWM control signal is used to control a turn-on frequency and a duty cycle of a switching transistor of the inverter circuit 122.

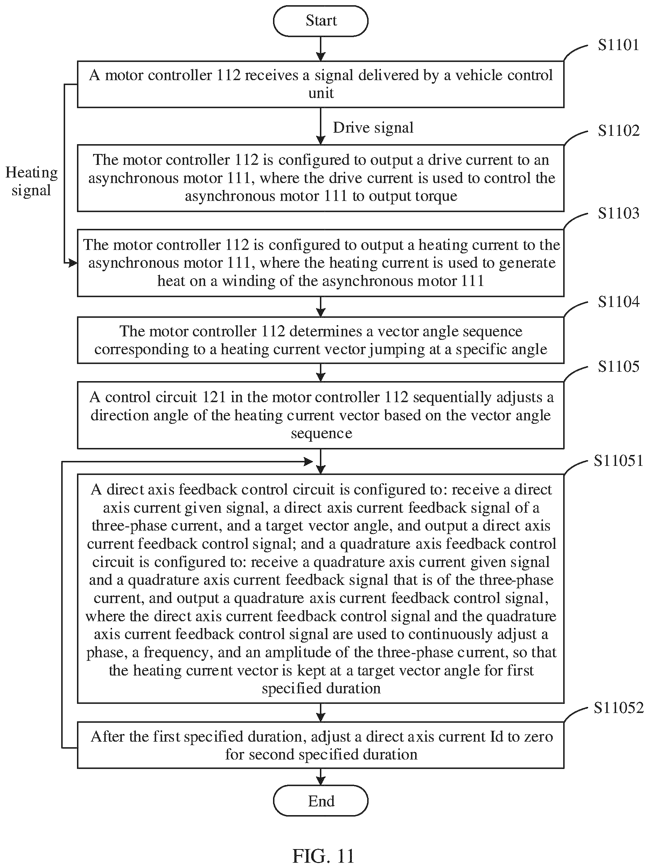

The following steps completely describe specific operations performed by the motor controller 112 provided in embodiments of this application. Refer to FIG. 11.

Step S 1101: The motor controller 112 receives a signal delivered by a vehicle control unit, and performs step S1102 if the signal is a drive signal, or performs step S1103 if the signal is a heating signal.

Step S1102: The motor controller 112 is configured to output a drive current to the asynchronous motor 111, where the drive current is used to control the asynchronous motor 111 to output torque. The motor controller 112 receives electric energy of the power battery, and supplies power to the drive motor, and the drive motor is configured to drive a wheel of the electric vehicle 10 to rotate, so that the electric vehicle 10 travels.

Step S1103: The motor controller 112 is configured to output a heating current to the asynchronous motor 111, where the heating current is used to generate heat on the winding of the asynchronous motor 111. In this application, a waveform of the heating current is adjusted from a sine wave to a square wave or a step wave. This can prevent the switch component of each bridge arm of the inverter circuit 122 from being subject to larger thermal stress. In this way, the service life of the switch component is prolonged. In addition, when heat resistance capabilities are the same, heating power can be further increased.

Step S 1104: The motor controller 112 determines the vector angle sequence corresponding to the heating current vector jumping at a specific angle. When the plurality of angles of the heating current vector are set, as long as the angle that is of the heating current vector (or the close angle) and that corresponds to the positive/negative current peak of each phase current is dodged, the switch component of each bridge arm of the inverter circuit 122 may be prevented from being subject to larger thermal stress. In this way, the service life of the switch component is prolonged.

Step S1105: The control circuit 121 in the motor controller 112 sequentially adjusts a direction angle of the heating current vector based on the vector angle sequence. A process of adjusting the direction angle of the heating current vector includes steps S 11051 and S 11052 that are cyclically performed.

Step S11051: The direct axis feedback control circuit is configured to: receive the direct axis current given signal, the direct axis current feedback signal of the three-phase current, and the target vector angle, and output the direct axis current feedback control signal. The quadrature axis feedback control circuit is configured to: receive the quadrature axis current given signal and the quadrature axis current feedback signal that is of the three-phase current, and output the quadrature axis current feedback control signal. The direct axis current feedback control signal and the quadrature axis current feedback control signal are used to continuously adjust the phase, the frequency, and the amplitude of the three-phase current, so that the heating current vector is kept at the target vector angle for the first specified duration.

Step S11052: After the first specified duration, adjust the direct axis current Id to zero for second specified duration. The direct axis current feedback control circuit is configured to determine the direct axis current given signal and the quadrature axis current given signal based on a next target vector angle, to set the amplitude of the three-phase current of the asynchronous motor 111 to zero when performing angle jump of the heating current vector, to avoid generating the electromagnetic torque. The foregoing steps are continuously performed to complete heating of the power battery.

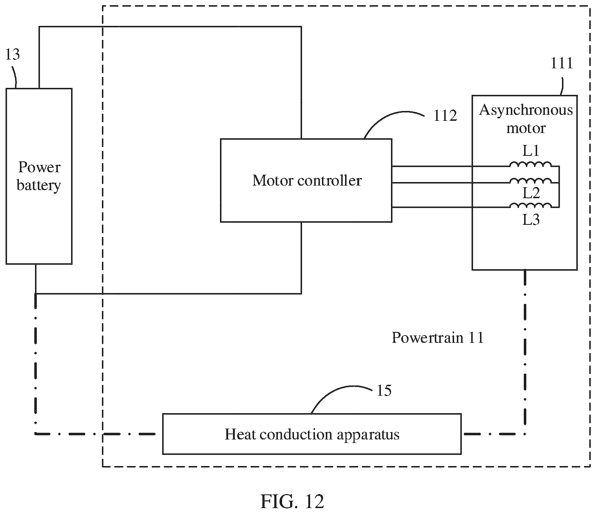

As shown in FIG. 12, the electric vehicle 10 provided in embodiments of this application includes a heat conduction apparatus 15. According to thermal effect of a current, the three-phase current on the asynchronous motor 111 causes the three-phase winding of the asynchronous motor 111 to heat up, and the heat conduction apparatus 15 is configured to conduct heat generated on the three-phase winding of the asynchronous motor 111 and heat generated on the bridge arm switch component of the inverter circuit to the power battery 13. This saves energy, and improves heating efficiency of the power battery 13.

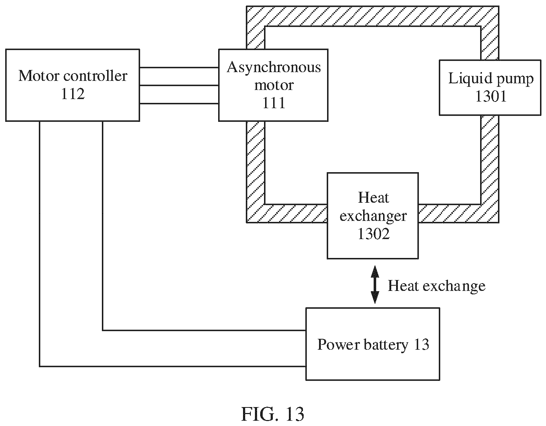

In an embodiment, as shown in FIG. 13, the heat conduction apparatus 15 includes a heat transfer medium, a heat transfer medium flow loop, a liquid pump 1301, and a heat exchanger 1302. The heat transfer medium is configured to absorb the heat generated on the winding of the asynchronous motor 111. The heat transfer medium flows in the heat transfer medium flow loop. The liquid pump 1301 is configured to provide power for flow of the heat transfer medium. The heat exchanger 1302 is configured to absorb the heat in the heat transfer medium and conduct the absorbed heat in the heat transfer medium to the power battery 13, to heat the power battery 13.

Based on a same concept, an embodiment of this application further provides a powertrain. The powertrain includes an asynchronous motor and a motor controller. The motor controller is configured to output a drive current or a heating current to the asynchronous motor. Both the drive current and the heating current are three-phase currents. A waveform of each phase current of the drive current is a sine wave, and the drive current is used to control the asynchronous motor to output torque. A waveform of each phase current of the heating current is a square wave or a step wave, the heating current is used to control the torque output by the asynchronous motor to be zero, and the heating current is used to heat a winding of the asynchronous motor.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1.  A motor controller, wherein the motor controller is configured to output a drive current or a heating current to an asynchronous motor, and both the drive current and the heating current are three-phase currents, wherein

    a waveform of each phase current of the drive current is a sine wave, and the drive current is used to control the asynchronous motor to output torque; and

a waveform of each phase current of the heating current is a square wave or a step wave, the heating current is used to control the torque output by the asynchronous motor to be zero, and the heating current is used to heat a winding of the asynchronous motor.

2. The motor controller according to claim 1, wherein the motor controller is configured to:

output the drive current in response to a torque signal, wherein the torque signal indicates the motor controller to drive the asynchronous motor to output the torque; and

output the heating current in response to a heating signal, wherein a temperature of a power battery indicated by the heating signal is less than a preset value.

3. The motor controller according to claim 1 or 2, wherein each phase current of the heating current changes periodically, each change periodicity comprises a plurality of time periods, an amplitude of each phase current remains the same in each time period, and the amplitude of each phase current changes in different time periods.

4. The motor controller according to any one of claims 1 to 3, wherein each phase current of the heating current changes periodically, each change periodicity comprises a plurality of time periods in which an amplitude of each phase current of the heating current is zero, the plurality of time periods comprise a plurality of first time periods with same duration and a plurality of second time periods with same duration, and the duration of each first time period is greater than the duration of each second time period.

5. The motor controller according to claim 4, wherein directions of amplitudes of each phase current of the heating current are opposite at a start moment and an end moment of the first time period, and amplitudes of each phase current of the heating current are the same at a start moment and an end moment of the second time period.

6. The motor controller according to any one of claims 1 to 5, wherein a quadrature axis component of the heating current is zero, an amplitude of a direct axis component of the heating current alternates between a fixed value and zero in sequence, and the fixed value is greater than zero.

7. The motor controller according to any one of claims 1 to 6, wherein the amplitude of the direct axis component is duration of the fixed value, or the amplitude of the direct axis component is duration of zero.

8. The motor controller according to claim 1, wherein a frequency of each phase current of the drive current is greater than a frequency of each phase current of the heating current, and heating power of each phase current of the drive current on the winding of the asynchronous motor is less than heating power of each phase current of the heating current on the winding of the asynchronous motor.

9. The motor controller according to any one of claims 1 to 8, wherein the motor controller comprises an inverter circuit, the inverter circuit comprises a three-phase switching transistor bridge arm, a bridge arm midpoint of each switching transistor bridge arm is configured to connect to a one-phase winding of the asynchronous motor, the bridge arm midpoints of the three-phase switching transistor bridge arm of the inverter circuit are configured to output the drive current or the heating current to the winding of the asynchronous motor.

10. A powertrain, wherein the powertrain comprises an asynchronous motor and a motor controller, the motor controller is configured to output a drive current or a heating current to the asynchronous motor, and both the drive current and the heating current are three-phase currents, wherein

a waveform of each phase current of the drive current is a sine wave, and the drive current is used to control the asynchronous motor to output torque; and

a waveform of each phase current of the heating current is a square wave or a step wave, the heating current is used to control the torque output by the asynchronous motor to be zero, and the heating current is used to heat a winding of the asynchronous motor.

11. The powertrain according to claim 10, wherein a frequency of each phase current of the drive current is greater than a frequency of each phase current of the heating current, and heating power of each phase current of the drive current on the winding of the asynchronous motor is less than heating power of each phase current of the heating current on the winding of the asynchronous motor.

12. The powertrain according to claim 10, wherein the powertrain comprises a heat conduction apparatus, the heating current is used to heat the winding of the asynchronous motor, and the heat conduction apparatus is configured to conduct heat generated by the winding of the asynchronous motor to a power battery.

13. The powertrain according to claim 10, wherein each phase current of the heating current changes periodically, each change periodicity comprises a plurality of time periods, an amplitude of each phase current remains the same in each time period, and the amplitude of each phase current changes in different time periods.

14. The powertrain according to claim 10, wherein each phase current of the heating current changes periodically, each change periodicity comprises a plurality of time periods in which an amplitude of each phase current of the heating current is zero, the plurality of time periods comprise a plurality of first time periods with same duration and a plurality of second time periods with same duration, and the duration of each first time period is greater than the duration of each second time period.

15. An electric vehicle, wherein the electric vehicle comprises a vehicle control unit, a power battery, wheels, and the powertrain according to any one of claims 10 to 14, and the motor controller is configured to:

output a drive current in response to a torque signal from the vehicle control unit, wherein the drive current is used to control an asynchronous motor to output torque indicated by the torque signal; and
output a heating current in response to a heating signal from the vehicle control unit, wherein a waveform of each phase current of the heating current is a square wave or a step wave, the heating current is used to control the torque output by the asynchronous motor to be zero, and the heating current is used to heat a winding of the asynchronous motor.

EP 4 559 726 A2

Wheel 12

Electric vehicle 10

FIG. 1

Powertrain 11

Wheel 12

Wheel 12

FIG. 2

15

FIG. 3

Amplitude

U-phase current

Heat balance is achieved                          Time

Amplitude

V-phase current

Heat balance is achieved                          Time

Amplitude

W-phase current

Heat balance is achieved                          Time

FIG. 4

FIG. 5

FIG. 6

FIG. 7

FIG. 8

Quadrature axis current given signal
(given as 0)

Direct axis current
given signal

Quadrature axis
feedback control circuit

Direct axis feedback
control circuit

Iq

Id

Control
circuit
121

Inverter
circuit
122

Vector angle sequence signal

Direct axis current
feedback signal

Id time sequence diagram

111

FIG. 9

FIG. 10

Start

S1101

A motor controller 112 receives a signal delivered by a vehicle control unit

Drive signal

S1102

The motor controller 112 is configured to output a drive current to an asynchronous motor 111, where the drive current is used to control the asynchronous motor 111 to output torque

Heating signal

S1103

The motor controller 112 is configured to output a heating current to the asynchronous motor 111, where the heating current is used to generate heat on a winding of the asynchronous motor 111

S1104

The motor controller 112 determines a vector angle sequence corresponding to a heating current vector jumping at a specific angle

S1105

A control circuit 121 in the motor controller 112 sequentially adjusts a direction angle of the heating current vector based on the vector angle sequence

S11051

A direct axis feedback control circuit is configured to: receive a direct axis current given signal, a direct axis current feedback signal of a three-phase current, and a target vector angle, and output a direct axis current feedback control signal; and a quadrature axis feedback control circuit is configured to: receive a quadrature axis current given signal and a quadrature axis current feedback signal that is of the three-phase current, and output a quadrature axis current feedback control signal, where the direct axis current feedback control signal and the quadrature axis current feedback control signal are used to continuously adjust a phase, a frequency, and an amplitude of the three-phase current, so that the heating current vector is kept at a target vector angle for first specified duration

S11052

After the first specified duration, adjust a direct axis current Id to zero for second specified duration

End

FIG. 11

FIG. 12

FIG. 13